# EUROPEAN PATENT SPECIFICATION

(11) **EP 3 307 427 B1**
(45) Date of publication and mention of the grant of the patent: **16.08.2023**
(21) Application number: 16732816.0
(22) Date of filing: 09.06.2016
(51) Int. Cl.: B01J 13/02, C11D 3/386, C11D 17/00

(54) **OSMOTIC BURST ENCAPSULATES**
OSMOTISCHE BURST-KAPSELN
PRODUITS ENCAPSULÉS OSMOTIQUES À ÉCLATEMENT

(30) Priority: 09.06.2015 US 201562173255 P
(43) Date of publication of application: 18.04.2018
(73) Proprietor: Danisco US Inc., Palo Alto, California 94304 (US)
(72) Inventor: GEBERT, Mark, Palo Alto, California 94304 (US); DOAN, Huy, Palo Alto, California 94304 (US); DALE, Douglas A., Palo Alto, California 94304 (US)
(74) Representative: Mewburn Ellis LLP
(86) International application number: PCT/US2016/036595
(87) International publication number: WO 2016/201044

(56) References cited:
- EP-A1- 1 502 645
- EP-A1- 1 502 646
- WO-A1-02/055649
- WO-A1-03/002248

## Description

### PRIORITY

The present application claim priority to U.S. Provisional Application Serial No. 62/173,255, filed on June 9, 2015.

### TECHNICAL FIELD

The present compositions and methods relate to osmotic burst encapsulates capable of releasing an enzyme payload in response to changes in the osmolarity of the environment. The compositions and methods have applications in laundry and dishwashing.

### BACKGROUND

Enzymes are desirable components in laundry and dishwashing detergents and other cleaning compositions as they provide cleaning benefits on a variety of stains. Currently, the majority of the enzymes are added into liquid detergent formulations in a soluble form, which limits the number of potentially useful enzymes to only those that are stable in the harsh environment of the detergents, which typically include anionic and non-ionic surfactants, builders, chelators, bleach actives, and other enzymes.

There is a broad need to compartmentalize enzymes or other actives in liquid formulas that contain such incompatible ingredients, so that they are stable during storage, but release quickly upon dilution in application. Many otherwise effective enzymes cannot be utilized because they are unstable in liquid formulations such as detergents. Several prior attempts to encapsulate or otherwise compartmentalize enzymes in liquids have not been successful due to incomplete protection and/or incomplete release upon dilution. Previous approaches suffer from multiple problems, including (1) sensitivity to variations in composition of the enzyme or liquid continuous phase (*e.g.* varying water and salt levels in detergents; (2) settling or phase separation of the encapsulates, which may require viscous "structuring agents" or "suspension aids;" (3) poor solubility of the coating agents; (4) destabilization of enzyme by its leakage into the continuous (detergent) phase, or leakage of detrimental components from the continuous phase into the encapsulate; or incomplete inhibition. Examples of prior technologies include LDPs (liquid dispersion products), LCCs (liquid compatibility capsules), inhibitors (e.g. 4-formyl-phenylboronic acid), and organically modified silica sol-gels.

US Patent No. 7,101,575 describes a method for producting nanocapsules and microcapsules by layer-wise polyelectrolyte self-assembly, into which enzymes and other actives can be encapsulated. Work by Mohwald and others at the Max Planck Institute of Colloids and Interfaces demonstrates that microcapsules produced (e.g. with anionic alginate and cationic chitosan polyelectrolytes) by this layer-by-layer method result in membranes of controlled dimesions and tensile strength, which undergo deformation or rupture at specific osmotic pressures. However, the process is cumbersome as it involves starting with a template particle that is later dissolved in acid to form an empty capsule, then "loading" the enzyme by first swelling the microcapsule and then later contracting it. It also involves formation of multiple layers using multiple buffer exchanges involving extensive dilution. So this is not a scaleable or economical process for industrial applications.

US Patent No. 7,169,741 describes the preparation of visible macroscopic beads by jetting an solution of enzyme containing one polyectrolyte into a hardening bath containing a second, oppositely charged polyelectrolyte which complexes the first polyelectrolyte to form a semipermeable membrane around each droplet. Such semipermeable membranes have been shown to rupture when the detergent is diluted to significantly reduce the osmotic pressure outside the microcapules. However, the physics of this process result in visibly distinctive microcapsules which are 200-800 microns in diameter. These particles will tend to settle without careful formulation. A droplet hardening process such as this is not capable of producing very small microcapsules of less than 50 microns in diameter, or ideally less than microns in diameter, which can be suspended in detergents without structuring agents.

WO 02/055649 describes microcapsules for containing cleaning substances which are formed by an alternating "complexation" of polyelectrolyte in a layer-by-layer approach to synthesis.

### BRIEF SUMMARY OF THE INVENTION

The present invention relates to delivery capsules and methods for releasing a benefit agent from a concentrated cleaning composition upon dilution of the cleaning composition in water to produce a wash liquor as set out in the claims.

In one aspect, the present invention provides a delivery capsule for releasing a benefit agent from a concentrated cleaning composition upon dilution of the cleaning composition to produce diluted wash liquor, the capsule comprising:
a core comprising matrix material and a benefit agent, wherein the osmolarity of the core is within an order of magnitude of the osmolarity of the concentrated cleaning composition, which core is encapsulated with a substantially insoluble semipermeable membrane that is permeable to water but not to the matrix material, the benefit agent, or other osmolytes present in the core or concentrated cleaning composition, and wherein the semipermeable membrane is formed from a cellulose ester or cellulose ether;
wherein when immersed in the concentrated cleaning composition the osmotic pressure in the core remains within an order of magnitude of the osmotic pressure of the concentrated cleaning composition and the semipermeable membrane retains structural integrity;
wherein upon dilution of the cleaning composition by at least ten-fold to produce a wash liquor, the reduced osmotic pressure of the wash liquor compared to the concentrated cleaning composition causes water to diffuse through the semipermeable membrane into the core, causing the core to expand and burst or rupture the semi-permeable membrane, with concomitant release of the benefit agent into the wash liquor; and wherein the benefit agent is one or more enzymes or other macromolecular actives.

In a further aspect, the present invention provides a method for releasing a benefit agent from a concentrated cleaning composition upon dilution of the cleaning composition in water to produce a wash liquor, comprising:
providing a concentrated cleaning composition comprising capsules comprising core particles with coatings, wherein the core particles comprises matrix material and a benefit agent, the matrix material being capable of expanding in volume when transitioned from a first environment having osmolarity similar to the osmolarity of the core to a second environment having osmolarity less than the osmolarity of the core, the core particle being coated with a substantially insoluble semipermeable membrane allowing the diffusion of water but not the core matrix materials, benefit agent, or other solutes in the core or the concentrated detergent composition, through the membrane; and diluting the concentrated cleaning composition at least ten-fold with water to produce wash liquor having a lower osmolarity than the concentrated cleaning composition, wherein the semipermeable membrane comprises a cellulose ester;
wherein, upon transitioning from the first environment to the second environment, the core of the capsules swell in volume and causes the burst or rupture of the semipermeable membranes, resulting in the release of the benefit agent into the wash liquor, and wherein the dissolution of the semipermeable membrane is not critical to the release of the benefit agent; and
wherein the benefit agent is one or more enzymes or other macromolecular actives.

### BRIEF DESCRIPTION OF THE DRAWINGS

Figure 1 is a bar graph showing leakage of a 4.55% subtilisin protease-containing granule after storage in TIDE@ laundry detergent for 24, 48 and 72 hours as a function of the percentage of ethyl cellulose in the coating. Release of protease in wash water after one hour is also shown.
Figure 2 is a bar graph showing leakage of a 2.66% subtilisin protease-containing granule after storage in TIDE@ laundry detergent for 24 and 48 hours as a function of the percentage of ethyl cellulose in the coating. Release of protease in wash water after one hour is also shown.

### DETAILED DESCRIPTION

### I. Introduction

The present compositions and methods relate to an osmotic burst enzyme delivery system, osmotic burst encapsulates, and methods of use, thereof. The encapsulates include core particles containing enzymes, which are bounded by substantially insoluble semi-permeable membranes to separate the enzymes (or other macromolecular actives) from their environment. These enzyme delivery capsules, or osmotic blast encapsulates, contain solutes which provide an osmotic pressure similar in magnitude to the osmotic pressure of an external continuous phase environment. Upon dilution of the continuous phase by at least ten-fold, the osmotic pressure of the continuous phase is greatly and suddenly reduced, leading the delivery capsules to burst or rupture, with concomitant release of the actives into the diluted continuous phase. Details and embodiments of the compositions and methods are provided, below.

### II. Definitions

Unless defined otherwise herein, all technical and scientific terms used herein have the same meaning as commonly understood by one of ordinary skill in the art to which this invention pertains. Although any methods and materials similar or equivalent to those described herein find use in the practice of the present invention, the preferred methods and materials are described herein. Accordingly, the terms defined immediately below are more fully described by reference to the Specification as a whole. Also, as used herein, the singular terms "a," "an," and "the" include the plural reference unless the context clearly indicates otherwise. It is to be understood that this invention is not limited to the particular methodology, protocols, and reagents described, as these may vary, depending upon the context they are used by those of skill in the art.

It is intended that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

As used herein, "osmotic burst encapsulates" are enzyme or other macromolecular active delivery capsules containing core particles surrounded by a substantially insoluble semi-permeable membranes (*i.e.*, coating).

As used herein, the phrase "substantially insoluble semi-permeable membrane" refers to a membrane or coating on a particle that is permeable to water but not enzymes, surfactants, or other solutes present in typical cleaning compositions *(e.g.,* laundry detergent), and does not dissolve in an aqueous environment to the extent that dissolution is not part of the mechanism of release of enzyme from osmotic burst encapsulate. The membrane may dissolve eventually in a cleaning application *(e.g.,* in a laundry cycle) but the mechanism of release of enzymes from osmotic burst encapsulates is the rapid swelling of core particles that disrupts *(i.e.,* bursts, tears, or ruptures) the membrane.

As used herein, an "aqueous medium" or "aqueous solution" is a solution and/or suspension in which the solvent is primarily water *(i.e.,* the solvent is at least 50% water, at least 60% water, at least 70% water, at least 80% water, or even at least 90% water). The aqueous medium may include any number of dissolved or suspended components, including but not limited to surfactants, salts, buffers, stabilizers, complexing agents, chelating agents, builders, metal ions, additional enzymes and substrates. Exemplary aqueous media are laundry and dishwashing wash liquors. Materials such as textiles, fabrics, dishes, kitchenware, and other materials may also be present in or in contact with the aqueous medium.

As used herein, the term "continuous phase" refers to the liquid environment in which osmotic burst encapsulates are suspended.

As used herein, the term "encapsulated phase" refers to the core environment of the osmotic burst encapsulates.

As used herein, the term "low-water," with reference to a liquid laundry detergent composition, indicates that the detergent composition contains about 25% or less water, for example, from about 10% to about 25% water, or even from about 15% to about 25% water (vol/vol). Examples of low water detergent compositions are concentrated heavy duty liquid (HDL) laundry detergents, such as ALLO Small & Mighty Triple Concentrated Liquid Laundry Detergent (Sun Products Corp.), ARM & HAMMER^{®} 2x Concentrated Liquid Laundry Detergent (Church & Dwight), PUREX@ concentrate Liquid Laundry Detergent (Henkel), TIDE@ 2x Ultra Concentrated Liquid Laundry Detergent (Procter & Gamble).

As used herein, the term "very low-water," with reference to a liquid laundry detergent composition, indicates that the detergent composition contains about 10% or less water, for example, from about 1% to about 15% water, or even from about 1% to about 10% water (vol/vol). Examples of very low-water detergent compositions are found in PUREX@ UltraPacks (Henkel), FINISH^{®} Quantum (Reckitt Benckiser), CLOROX^{™} 2 Packs (Clorox), OxiClean Max Force Power Paks (Church & Dwight), and TIDE@ Stain Release, CASCADE^{®} ActionPacs, and TIDE@ Pods^{™} (Procter & Gamble). Preferred very low-water detergent compositions do not dissolve the water-soluble material used in the unit dose packages described, herein.

As used herein, a "substantially non-aqueous" solution contains less than about 5% water or less (vol/vol).

As used herein, a "non-aqueous" solution contains less than about 2% water (vol/vol).

As used herein, a "liquid" form of a chemical component refers to a liquid, gel, or slurry.

As used herein, the terms "purified" and "isolated" refer to the removal of contaminants from a sample and/or to a material *(e.g.,* a protein, nucleic acid and cell) that is removed from at least one component with which it is naturally associated. For example, these terms may refer to a material that is substantially or essentially free from components which normally accompany it as found in its native state, such as, for example, an intact biological system.

As used herein, the term "spray drying" refers to a method of producing a dry powder from a liquid or slurry by rapidly drying with a hot gas, as known in the art and discussed for example in US Patent 5,423,997 and WO2008/088751A2.

As used herein, the term "hot core" refers to a core particle that includes a beneficial active agent, such as an enzyme.

As used herein, the term "UFC Solids" refers to ultrafiltrate concentrate from a fermentor/bioreactor, and is synonymous with enzyme concentrate solids.

As used herein, the term "bleaching" refers to the treatment of a material (*e.g.,* fabric, laundry and pulp) or surface for a sufficient length of time and under appropriate pH and temperature conditions to effect a brightening *(i.e.,* whitening) and/or cleaning of the material. Examples of chemicals suitable for bleaching include but are not limited to ClO₂, H₂O₂, peracids and NO₂.

As used herein, "concentrated cleaning compositions" refers to compositions that are used for the removal of undesired compounds from items to be cleaned, such as fabric, dishes, contact lenses, other solid substrates, hair (shampoos), skin (soaps and creams), teeth (mouthwashes and toothpastes), and which are diluted with water at least ten-fold when put into use.

As used herein, the terms "detergent composition" and "detergent formulation" are used in reference to mixtures which are intended for use in a wash medium for the cleaning of soiled objects. In some preferred embodiments, the term is used in reference to laundering fabrics and/or garments (*e.g.*, "laundry detergents"). In alternative embodiments, the term refers to other detergents, such as those used to clean dishes and cutlery (*e.g.*, "dishwashing detergents").

As used herein, the term "nonionic surfactant" refers to a surfactant molecule with a non-electrically charged polar group.

As used herein, the term "anionic surfactant" refers to a surfactant molecule with a negatively charged polar group at the pH of the composition or the application of use. Salts used to complex or neutralize the surfactant, *e.g.*, forming the monoethanolamine (MEA) salt of linear alkylbenzene sulfonate (LAS) are included I accounting herein for the mass or concentration of anionic surfactant.

As used herein, the phrase "detergent stability" refers to the stability of a detergent composition. In some embodiments, the stability is assessed during the use of the detergent, while in other embodiments, the term refers to the stability of a detergent composition during storage.

As used herein, the term "disinfecting" refers to the removal of contaminants from the surfaces, as well as the inhibition or killing of microbes on the surfaces of items. It is not intended that the present invention be limited to any particular surface, item, or contaminant(s) or microbes to be removed.

As used herein the term "hard surface cleaning composition" refers to detergent compositions for cleaning hard surfaces such as floors, walls, tile, bath and kitchen fixtures.

As used herein, "non-fabric cleaning compositions" encompass hard surface cleaning compositions, dishwashing compositions, personal care cleaning compositions (*e.g.*, oral cleaning compositions, denture cleaning compositions and personal cleansing compositions), and compositions suitable for use in the pulp and paper industry.

The terms "recovered," "isolated," "purified," and "separated" as used herein refer to a material *(e.g.,* a protein, nucleic acid, or cell) that is removed from at least one component with which it is naturally associated. For example, these terms may refer to a material which is substantially or essentially free from components which normally accompany it as found in its native state, such as, for example, an intact biological system.

"Water miscible" as used herein refers to a liquid forming a single thermodynamic liquid phase or isotropic phase upon mixing with water, at a specified ratio of water to the liquid.

A "suspension" or "dispersion" as used herein refers to a two phase system wherein a discontinuous solid phase is dispersed within a continuous liquid phase.

The terms "immunogenicity," "immunogenenic," and related terms refers to the ability of an immunogen, *e.g.,* an α-amylase polypeptide, to initiate or perpetuate an immune reaction in an animal, thereby causing the animal to develop sensitivity to the immunogen, resulting in the need to avoid or reduce further contact with the immunogen.

The term "less immunogenic" means a given composition has a reduced potential to initiate or perpetuate and immune response in a population of animals.

The phrase "humans having contact with the detergent composition" refers to any number of workers at a detergent manufacturing site or consumers who are exposed to a given detergent composition, including exposure to granules, liquids, and aerosols, such that they have a potential to develop an immune response to components of the composition.

### III. Osmotic Burst Encapsulates

The present compositions and methods relate to an osmotic burst delivery system for use in laundry dishwashing, and other cleaning applications. The system is able to contain and stabilize an enzyme (or other macromolecular active) payload in an environment with a low amount of water and efficiently release the enzyme (or other macromolecular active) payload when the environment changes to one with a high amount of water. The release of enzyme (or other macromolecular active) is the result of bursting or rupturing of a semipermeable membrane due to a rapid increase in osmotic pressure inside the particle.

The compositions and methods utilize core particles *(i.e.,* cores) surrounded by substantially-insoluble semipermeable membranes (*i.e.*, coatings) to separate enzymes (or other macromolecular actives) from the surrounding liquid in which they are suspended. The cores, which may also be referred to as the encapsulated phase, contain solutes that provide an osmotic pressure similar in magnitude to the osmotic pressure of the external liquid, also referred to as the continuous phase. Specifically, the osmolarity of the cores is within an order of magnitude of the osmolarity of the concentrated cleaning composition, meaning that the cores have 0.1 to 10 times the osmolarity of the cleaning composition. In some embodiments, the osmolarity of the cores is within 0.2 to 5 times, 0.3 to 4 times, 0.4 to 3 times, 0.5 to 2 times, 0.6 to 1.5 times, 0.7 to 1.3 times, 0.8 to 1.2 times, or even 0.9 to 1.1 times the osmolarity of the concentrated cleaning composition. Upon dilution of the continuous phase by at least about ten-fold, as is the case when putting laundry or dishwashing detergent into consumer use, the osmotic pressure of the continuous phase is greatly and suddenly reduced, resulting in the rapid influx of water into the cores, increasing their osmolarity to greater than that of the diluted clearing composition, which causes the cores to swell and cause the semi-permeable membranes to burst or rupture, with concomitant release of the enzymes into the diluted continuous phase.

These enzyme delivery capsules, also referred to herein as osmotic burst encapsulates, thereby provide a means to stably and homogeneously suspend enzyme or active in a liquid, with substantial isolation and protection from the bulk external formulation. The burst strength of the capsule membranes is designed to operate over a narrow and defined range of osmotic strengths. Thus, the dilution trigger is sudden, complete and relatively insensitive to variations in chemical composition of the continuous and encapsulated phases, other than the single variable of osmotic strength, which provides a more universal basis for a dilution trigger than water activity, ionic strength, or specific chemistries. An important feature of the compositions and methods is that dissolution of the membrane is not required for release of the enzyme or other active from the cores following dilution trigger.

Embodiments of the present osmotic burst encapsulates are described in detail in the following paragraphs.

### A. Cores

The osmotic burst encapsulate contains a core that includes matrix material, enzymes and/or other actives, and optionally other components.

### 1. Matrix materials

The cores of the osmotic burst encapsulates include a matrix material, alternatively referred to as an osmolyte, tailored for the osmotic environment of the continuous phase in which they will be suspended and preselected enzymes and/or other actives to be released following the osmotic burst.

Nonlimiting examples of matrix materials include, but are not limited to, highly water soluble materials that are of a molecular weight less than 5,000 Daltons, and even less than 1,000 Daltons, and which can generate a high osmotic pressure in aqueous solution. In some embodiments, the matrix materials are polyols. In particular embodiments, the matrix materials are sucrose, glucose, fructose, lactose, galactose, maltose, glycerol, erythritol, threitol, arabitol, xylitol, ribitol, mannitol, sorbitol, galactitol, fucitol, iditol, inositol, volemitol, isomalt, maltitol, lactitol, maltotriitol, maltotetraitol, polyglycitol, or a combination, thereof. In some embodiments, the matrix material is selected from salts of inorganic or organic acids, including but not limited to sodium, potassium, ammonium, calcium or magnesium salts of sulfates, phosphates, citrates, acetates, chlorides, bromides, or fluorides. In some embodiments, the matrix material is a soluble polysaccharide.

In some embodiments, the matrix material is a polycation or a polyanion. Suitable polyanions include alginate, gum arabic, polystyrene sulfonate. Suitable polycations include chitosan, and polyamines (including Cytec C-581 flocculating polymer).

In some embodiments, the benefit agent, or a composition comprising a benefit agent serves as an osmolyte (see, below).

### 2. Benefit agents

Cores contain enzymes and/or other macromolecular actives (collectively referred to as benefit agents) as part of the matrix or may be coated with actives, or both. While the present methods are largely described for use in delivering enzymes, they are clearly as well-suited for delivering other macromolecular actives. For example, one enzyme may be present as part of the core matrix while another is coated onto the core. In either case, the benefit agents will, by design, be exposed to the amount of water in the surrounding environment and must be formulated accordingly.

The core may include a wide range of enzymes, for example, acyl transferases, α-amylases, β-amylases, α-galactosidases, arabinosidases, aryl esterases, β-galactosidases, carrageenases, catalases, cellobiohydrolases, cellulases, chondroitinases, cutinases, endo-β-1, 4-glucanases, endo-beta-mannanases, esterases, exo-mannanases, galactanases, glucoamylases, hemicellulases, hyaluronidases, keratinases, laccases, lactases, ligninases, lipases, lipoxygenases, mannanases, oxidases, oxidoreductases, pectate lyases, pectin acetyl esterases, pectinases, pentosanases, perhydrolases, peroxidases, peroxygenases, phenoloxidases, phosphatases, phospholipases, phytases, polygalacturonases, proteases, pullulanases, reductases, rhamnogalacturonases, β-glucanases, tannases, transglutaminases, xylan acetyl-esterases, xylanases, xyloglucanases, xylosidases, metalloproteases, additional serine proteases, and combinations, thereof.

Examples of suitable proteases include but are not limited to subtilisins, such as those derived from *Bacillus* (*e.g.,* subtilisin, lentus, amyloliquefaciens, subtilisin Carlsberg, subtilisin 309, subtilisin 147 and subtilisin 168), including variants as described in, *e.g.,* U.S. Pat. Nos. RE 34,606, 5,955,340, 5,700,676, 6,312,936, and 6,482,628. Additional protease include trypsin *(e.g.,* of porcine or bovine origin) and the *Fusarium* protease described in WO 89/06270. In some embodiments the protease is one or more of MAXATASE^{®}, MAXACAL^{™}, MAXAPEM^{™}, OPTICLEAN^{®}, OPTIMASE^{®}, PROPERASE^{®}, PURAFECT^{®}, PURAFECT^{®} OXP, PURAMAX^{™}, EXCELLASE^{™}, and PURAFAST^{™} (DuPont Industrial Biosciences); ALCALASE^{®}, SAVINASE^{®}, PRIMASE^{®}, DURAZYM^{™}, POLARZYME^{®}, OVOZYME^{®}, KANNASE^{®}, LIQUANASE^{®}, NEUTRASE^{®}, RELASE^{®} and ESPERASE^{®} (Novozymes); BLAP^{™} and BLAP^{™} variants (Henkel Kommanditgesellschaft auf Aktien, Duesseldorf, Germany), and KAP *(B. alkalophilus* subtilisin; Kao Corp., Tokyo, Japan). Additional proteases are described in WO95/23221, WO 92/21760, WO 09/149200, WO 09/149144, WO 09/149145, WO 11/072099, WO 10/056640, WO 10/056653, WO 11/140364, WO 12/151534, U.S. Pat. Publ. No. 2008/0090747, and U.S. Pat. Nos. 5,801,039, 5,340,735, 5,500,364, 5,855,625, US RE 34,606, 5,955,340, 5,700,676, 6,312,936, and 6,482,628.

Suitable proteases include neutral metalloproteases including those described in WO 07/044993 and WO 09/058661. Other exemplary metalloproteases include nprE, the recombinant form of neutral metalloprotease expressed in *Bacillus subtilis* (see *e.g.,* WO 07/044993), and PMN, the purified neutral metalloprotease from *Bacillus amyloliquefacients.*

Suitable lipases include, but are not limited to *Humicola lanuginosa* lipase (see *e.g.,* EP 258 068 and EP 305 216), *Rhizomucor miehei* lipase (see *e.g.,* EP 238 023), *Candida* lipase, such as C. *antarctica* lipase *(e.g.,* the C. *antarctica* lipase A or B; see *e.g.,* EP 214 761), *Pseudomonas* lipases such as *P. alcaligenes* lipase and *P. pseudoalcaligenes* lipase (see *e.g.,* EP 218 272), *P. cepacia* lipase (see *e.g.,* EP 331 376), *P. stutzeri* lipase (see *e.g.,* GB 1,372,034), P. *fluorescens* lipase, *Bacillus* lipase (*e.g.*, *B. subtilis* lipase (Dartois et al. (1993) Biochem. Biophys. Acta 1131:253-260); *B. stearothermophilus* lipase (see *e.g.,* JP 64/744992); and *B. pumilus* lipase (see *e.g.,* WO 91/16422)).

Additional suitable lipases include *Penicillium camembertii* lipase (Yamaguchi et al. (1991) Gene 103:61-67), *Geotricum candidum* lipase (See, Schimada et al. (1989) J. Biochem. 106:383-388), and various *Rhizopus* lipases such as *R. delemar* lipase (Hass et al. (1991) Gene 109:117-113), a *R. niveus* lipase (Kugimiya et al. (1992) Biosci. Biotech. Biochem. 56:716-719) and *R. oryzae* lipase. Additional lipases are the cutinase derived from *Pseudomonas mendocina* (see, WO 88/09367), and the cutinase derived from *Fusarium solani pisi* (WO 90/09446). Various lipases are described in WO 11/111143, WO 10/065455, WO 11/084412, WO 10/107560, WO 11/084417, WO 11/084599, WO 11/150157, and WO 13/033318. In some embodiments the protease is one or more of M1 LIPASE^{™}, LUMA FAST^{™}, and LIPOMAX^{™} (DuPont Industrial Biosciences); LIPEX^{®}, LIPOLASE^{®} and LIPOLASE^{®} ULTRA (Novozymes); and LIPASE P^{™} "Amano" (Amano Pharmaceutical Co. Ltd., Japan).

Suitable amylases include, but are not limited to those of bacterial or fungal origin, or even mammalian origin. Numerous suitable are described in WO9510603, WO9526397, WO9623874, WO9623873, WO9741213, WO9919467, WO0060060, WO0029560, WO9923211, WO9946399, WO0060058, WO0060059, WO9942567, WO0114532, WO02092797, WO0166712, WO0188107, WO0196537, WO0210355, WO9402597, WO0231124, WO9943793, WO9943794, WO2004113551, WO2005001064, WO2005003311, WO0164852, WO2006063594, WO2006066594, WO2006066596, WO2006012899, WO2008092919, WO2008000825, WO2005018336, WO2005066338, WO2009140504, WO2005019443, WO2010091221, WO2010088447, WO0134784, WO2006012902, WO2006031554, WO2006136161, WO2008101894, WO2010059413, WO2011098531, WO2011080352, WO2011080353, WO2011080354, WO2011082425, WO2011082429, WO2011076123, WO2011087836, WO2011076897, WO94183314, WO9535382, WO9909183, WO9826078, WO9902702, WO9743424, WO9929876, WO9100353, WO9605295, WO9630481, WO9710342, WO2008088493, WO2009149419, WO2009061381, WO2009100102, WO2010104675, WO2010117511, WO2010115021, WO2013184577, WO9418314, WO2008112459, WO2013063460, WO10115028, WO2009061380, WO2009100102, WO2014099523, WO2015077126A1, WO2013184577, WO2014164777, PCT/US12/70334, PCT/US13/74282, PCT/CN2013/077294, PCT/CN2013/077134, PCT/CN2013/077137, PCT/CN2013/077142, PCT/CN2012/087135, PCT/US12/62209, PCT/CN2013/084808, PCT/CN2013/084809, and PCT/US14/23458. Commercially available amylases include, but are not limited to one or more of DURAMYL^{®}, TERMAMYL^{®}, FUNGAMYL^{®}, STAINZYME^{®}, STAINZYME PLUS^{®}, STAINZYME ULTRA^{®}, and BAN^{™} (Novozymes), as well as POWERASE^{™}, RAPIDASE^{®} and MAXAMYL^{®} P, PREFERENZ^{®} S100, PREFERENZ^{®} S110, and PREFERENZ^{®} S1000 (DuPont Industrial Biosciences).

Suitable cellulases include but are not limited to those having color care benefits (see *e.g.,* EP 0 495 257). Examples include *Humicola insolens* cellulases (see *e.g.,* U.S. Pat. No. 4,435,307) and commercially available cellulases such as CELLUZYME^{®}, CAREZYME^{®} (Novozymes), KAC-500(B)^{™} (Kao Corporation), and REVITALENZ^{®} (DuPont Industrial Biosciences). In some embodiments, cellulases are incorporated as portions or fragments of mature wild-type or variant cellulases, wherein a portion of the N-terminus is deleted (see *e.g.*, U.S. Pat. No. 5,874,276). Additional suitable cellulases include those found in WO2005054475, WO2005056787, U.S. Pat. No. 7,449,318, and U.S. Pat. No. 7,833,773.

Suitable mannanases are described in U.S. Pat. Nos. 6,566,114, 6,602,842, 5, 476, and 775, 6,440,991). Commercially available include, but are not limited to MANNASTAR^{®}, PURABRITE^{™}, and MANNAWAY^{®}.

In some embodiments, peroxidases are used in combination with hydrogen peroxide or a source thereof *(e.g.,* a percarbonate, perborate or persulfate) in the compositions of the present teachings. In some alternative embodiments, oxidases are used in combination with oxygen. Both types of enzymes are used for "solution bleaching" (*i.e.,* to prevent transfer of a textile dye from a dyed fabric to another fabric when the fabrics are washed together in a wash liquor), preferably together with an enhancing agent (see *e.g.,* WO 94/12621 and WO 95/01426). Suitable peroxidases/oxidases include, but are not limited to those of plant, bacterial or fungal origin. Chemically or genetically modified mutants are included in some embodiments.

Suitable perhydrolases include the enzyme from *Mycobacterium smegmatis.* This enzyme, its enzymatic properties, its structure, and numerous variants and homologs, thereof, are described in detail in International Patent Application Publications WO 05/056782A and WO 08/063400A, and U.S. Patent Publications US2008145353 and US2007167344. In some embodiments, the *Mycobacterium smegmatis* perhydrolase, or homolog, includes the S54V substitution.

Other suitable perhydrolases include members of the carbohydrate family esterase family 7 (CE-7 family) described in, *e.g.,* WO2007/070609 and U.S. Patent Application Publication Nos. 2008/0176299, 2008/176783, and 2009/0005590. Members of the CE-7 family include cephalosporin C deacetylases (CAHs; E.C. 3.1.1.41) and acetyl xylan esterases (AXEs; E.C. 3.1.1.72). Members of the CE-7 esterase family share a conserved signature motif (Vincent et al., J. Mol. Biol., 330:593-606 (2003)).

Other suitable perhydrolase enzymes include those from *Sinorhizobium meliloti*, *Mesorhizobium loti*, *Moraxella bovis*, *Agrobacterium tumefaciens*, or *Prosthecobacter dejongeii* (WO2005056782), *Pseudomonas mendocina* (U.S. Patent No. 5,389,536), or *Pseudomonas putida* (U.S. Patent Nos. 5,030,240 and 5,108,457).

The enzymes may be crystalized, precipitated, spray dried, lyophilized, and/or compressed and provided in dry form, or resuspended liquid form, thereof. The enzymes may be provided as an ultrafiltration concentrate. They may be purified to a preselected level.

Where enzymes are coated onto cores, they can be applied in the form of either organic solutions or aqueous dispersions. The coating solutions may additionally contain plasticizers, fillers, pigments, dyes or lubricants, so long as such additional materials do not preclude the passage of water into the core. Suitable coating processes include fluidized bed spray-coating, pan coating, coacervation, and powder coating.

Representative detergent formulations useful for the present invention include the detergent formulations found in WO2013063460, WO2003010266, WO2006002755, WO2006088535, and US20110263475.

In some embodiments, the benefit agent, or a composition comprising the benefit agent, is itself an osmolyte. For example, cell broth or ultrafiltrate concentrate containing enzymes, or even concentrated purified enzymes, can serve as an osmolyte, expanding in the reduced osmotic pressure of a wash liquor compared to a concentrated cleaning composition.

### 3. Size and appearance

The nominal diameter and size distribution of the cores is not believed to be critical but can be tailored to suit manufacturing, performance, safety, and other requirements. Particles smaller than about 40 µm (microns, micrometers) are not visible to the human eye. The present cores may be much small than 40 µm, even in the nm (nanometer) range. Such particles are essentially invisible in a cleaning composition. Exemplary size ranges are 50-100 nm, 50-150 nm, 100-150 nm, 100-200 nm, 150-250 nm, 200-250 nm, 200-300 nm, 250-300 nm, 300-350 nm, 300-400 nm, 350-500 nm, 400-550 nm, 450-600 nm, 600-700 nm, 700-800 nm, 800-900 nm, 900-1000 nm, 1-10 µm, 10-20 µm, 20-30 µm, and 30-40 µm. Larger particles, *e.g.,* greater than about 40 µM, and certainly greater than 100 µm, 150 µm, or even 200 µm, are visible to the human eye and may be brightly colored such that they are prominently visible in the cleaning composition. Exemplary size ranges are 40-80 µm, 50-100 µm, 50-150 µm, 100-150 µm, 100-200 µm, 150-250 µm, 200-250 µm, 200-300 µm, 250-300 µm, 300-350 µm, 300-400 µm, 350-500 µm, and 400-550 µm.

In some cases, the size distribution range is narrow, such that the osmotic burst encapsulates are uniform in size. In some cases, the size distribution is not critical. In some osmotic burst encapsulates that contain different enzymes or other actives are differentially sized or differentially colored such that a detergent manufacturer, or a consumer, can identify the content of the osmotic burst encapsulates based on their color and size. In other cases, the different colors or sizes is purely for aesthetics.

### 4. Production of cores

Cores can be produced by various processes, including spray drying, precipitation, crystallization, coprecipitation with complexing agents, fluidized bed agglomeration, high shear granulation, pan granulation, extrusion/spheronization, and size reduction may be performed using processes such as air milling, grinding, or other methods. Processes such as spray drying and precipitation are capable of producing powders with diameters less than about 50 microns, and in some cases less than about 10 microns. Other techniques can be used to produce even smaller particles, such as submicron particles or nanoparticles, including high intensity atomization and atomization with nonsolvents such as supercritical carbon dioxide.

### B. Coatings

To achieve chemical isolation of the enzyme payload from the storage environment, the system requires a coating/encapsulate that allows very small molecules like water to pass, while excluding surfactants, builders, chelants, redeposition polymers, salts, and other osmolytes normally found in laundry and dishwashing detergent compositions. Ideally, the membrane has a molecular weight cut off between 20 and 100 Daltons, which excludes the diffusion of enzymes (10,000 to 100,000 Daltons), sugars (200 - 600 Daltons), ions like calcium (40 Daltons), and surfactants (1,000 to 3,000 Daltons) into the core particle.

Semipermeable water-insoluble membranes are formed from cellulose esters, such as cellulose acetate, cellulose triacetate, cellulose acetate butyrate, and cellulose acetate prioprionate, and cellulose ethers.

Suitable resins including the reaction products of an aldehyde and an amine, where suitable aldehydes include formaldehyde and suitable amines include melamine, urea, benzoguanamine, glycoluril, and mixtures thereof. Suitable melamines include methylol melamine, methylated methylol melamine, imino melamine, and mixtures thereof. Suitable ureas include dimethylol urea, methylated dimethylol urea, urea-resorcinol, and mixtures thereof. The use of melamine resins (melamine and formaldehyde) and urea-formalin resins (urea and formaldehyde) is particularly preferred. Suitable materials may be obtained from, *e.g*., Solutia Inc. (St Louis, Missouri, U.S.A.), Cytec Industries (West Paterson, New Jersey, U.S.A.), Sigma-Aldrich (St. Louis, Missouri, U.S.A.).

Coatings can be applied in the form of either organic solutions or aqueous dispersions. The coating solutions may additionally contain plasticizers, fillers, pigments, dyes or lubricants, so long as such additional materials do not adversely affect the osmolyte impermeability of the coating.

Encapsulation of cores can be performed by a variety of methods, including fluidized bed spray-coating, pan coating, powder coating, interfacial polymerization, *in situ* polymerization, coacervation, in-liquid drying, spray drying, in-liquid curing, and air suspension. Membrane materials and methods of applying membrane materials are described in detail in WO2007/038570, US7901772, and US8460792, WO2008/152543 and US8551935, and WO2011127011 and US20140107009.

As with cores, osmotic osmotic burst encapsulates that contain different enzymes or other actives can be differentially colored such that a detergent manufacturer, or a consumer, can identify the content of the osmotic burst encapsulates based on their color and size. In other cases, the colors are purely for asthetics.

Because the system relies on a large osmotic pressure inside the particle or chamber to cause semi-permeable membrane to burst, and important feature of the compositions and methods is that the membrane is complete and intact prior to the burst. Pinholes and cracks in the membrane will result in a particle or chamber that leaks its contents in response to increased osmotic pressure, rather than releasing the contents rapidly. Within a population of particles or chambers, a subset with pinholes or cracks is acceptable but is generally contrary to the theory of the delivery system and should be avoided.

Bilayers can be created by created by applying a first layer of a water soluble polymer (*e.g.*, by spray coating or other aqueous processes) and then applying a second reactive agent (water soluble polymer, salt or other crosslinking agent) to form a semipermeable membrane at the interface between the first polymer and the second reactive agent. The second reactive agent interacts with the water soluble layer by one of several mechanisms, including interfacial polymerization *(i.e.,* a covalent reaction), ionic complexation *(e.g.,* in the case of oppositely charged polyelectrolytes), crosslinking (*e.g.*, borate or sulfate ion-crosslinking of PVA), and/or interfacial precipitation. The second reactive agent can be applied either by spraying an aqueous solution of the agent onto particles coated with the first polymer or by introducing the coated particles into a bath containing an aqueous solution of the reactive agent, then separating the particles from the bath. Additional "curing" steps can employed to enhance or alter the properties of the interfacial membrane, e.g. subjecting the bilayer coated particles to humidity or temperature in order to enhance the interfacial reaction between the two components of the membrane. Final curing may take place when the particles are already deployed in their application.

### C. Properties of osmostic microencapsulates

The mechanism of burst release involves the osmolyte-containing core of a dialyser, in this case a core particle, filling with water due to Fick's law. As the dialyser fills with water, the osmotic pressure inside the dialyser grows to a high level, causing a surrounding semi-permeable membrane to deform and eventually tear, releasing the payload of enzymes into the surrounding environment. The system is envisioned for use in laundry and dishwashing applications, where the enzymes are retained in a particle or container during storage and released when the laundry or dishwashing composition is diluted with water.

The present osmotic burst encapsulates are therefore formulated in a manner such that the coating is permeable to water but not the enzyme or osmolytes and the coating maintains structural integrity under a relatively low osmotic pressure gradient, *e.g.,* less than about +20 atmospheres, or a negative osmotic pressure gradient, but reliably ruptures and becomes permeable to enzymes and osmolytes under an osmotic pressure gradient of greater than about +20 atmospheres, for example, at least 20, at least 30, at least 50, at least 100, at least 150, at least 200, or even at least 300 atmospheres, depending on the core matrix material used.

The dry core is formulated so that upon wetting with permeating water, an internal osmotic pressure of greater than 20 atmospheres is generated, for example, at least 20, at least 30, at least 50, at least 100, at least 150, at least 200, or even at least 300 atmospheres, depending on the coating used. The core and coating are selected to work in concert to ensure non-rupture of the osmotic burst encapsulates prior to dilution of the surrounding continuous liquid phase and efficient release of enzyme and other a actives upon dilution.

An important feature of an osmotic burst delivery system is its ability to efficiently release its payload upon dilution in water. In this regard, efficiency relates to both speed and completeness. Osmotic burst encapsulates should be able to release at least 50%, at least 60%, at least 70%, at least 80%, at least 90%, at least 95%, or more of their enzyme payload when exposed to a high water environment. The release time should be rapid, and may occur before the concentrated cleaning composition is fully diluted in the wash liquor. For example, 90% of the osmotic burst encapsulates may burst within at least 3 minutes of dilution, or even within 2 minutes, 1 minute, 30 seconds, 10 second following dilution.

### IV. Compositions containing the osmotic burst encapsulates

The present osmotic burst encapsulates may be added to laundry and dishwashing detergents that are diluted at least about ten-fold in water when put in use. These compositions are collectively referred to as concentrated cleaning compositions. The composition may include no water or up to about 35% water by weight (for example, up to about 1, 5, 10, 15, 20, 25, 30, or 35% water by weight). In some embodiments, the composition containing an enzyme suspension contains any of about 1% to about 30%, about 5% to about 25%, about 5% to about 15%, about 5% to about 10%, about 10% to about 20%, or about 15% to about 25% water by weight.

In some embodiments, the detergent composition is a liquid laundry detergent composition containing up to about 35% or less water, for example, from about 10% to about 25% water (vol/vol). Examples of low water detergent compositions are concentrated heavy duty liquid (HDL) laundry detergents, such as ALL^{®} Small & Mighty Triple Concentrated Liquid Laundry Detergent (Sun Products Corp.), ARM & HAMMER^{®} 2x Concentrated Liquid Laundry Detergent (Church & Dwight), PUREX@ concentrate Liquid Laundry Detergent (Henkel), TIDE@ 2x Ultra Concentrated Liquid Laundry Detergent (Procter & Gamble), and the like.

In some embodiments, the detergent composition is a low-water liquid laundry detergent composition containing up to about 10% or less water, for example, from about 1% to about 10% water (vol/vol). Examples of low-water detergent compositions are found in PUREX@ UltraPacks (Henkel), FINISH^{®} Quantum (Reckitt Benckiser), CLOROX^{™} 2 Packs (Clorox), OxiClean Max Force Power Paks (Church & Dwight), and TIDE@ Stain Release, CASCADE^{®} ActionPacs, and TIDE^{®} Pods^{™} (Procter & Gamble). Preferred very low-water detergent compositions do not dissolve the water-soluble material used in the unit dose packages described, herein.

Enzymes present in the osmotic burst encapsulates are stable in a composition containing the present osmotic burst encapsulates *(i.e.,* are catalytically active upon dilution of a cleaning composition comprising osmotic burst encapsulates) for at least 9 days at 37°C. In some embodiments, an enzyme of interest exhibits at least about 50, 60, 70, 80, 90, 95% or essentially all of the initial catalytic potential upon dilution in water, after about 2 weeks, 1 month, 2 months, or 3 months or longer at 25°C. In some embodiments, an enzyme of interest is stable in the composition containing an enzyme suspension, exhibiting at least about 50, 60, 70, 80, 90, 95% or essentially all of the initial catalytic potential upon dilution in water, after about 2 weeks, 1 month, 2 months, or 3 months or longer at 37°C.

Concentrated cleaning compositions may contain one or more surfactants, builders, bleaches, bleach precursors, enzyme stabilizers, complexing agents, chelating agents, foam regulators, corrosion inhibitors, anti-electrostatic agents, dyes, perfumes, bactericides, fungicides, and activators, and any of the additional ingredient listed, above for inclusion in the water-triggered liquid enzyme suspensions.

In some embodiments, the detergent composition does not contain boron or borate. In some embodiments, the detergent contains a low (*e.g.*, submillimolar) level of calcium. In some embodiments, the detergent composition contains low (*e.g.*, submillimolar) levels of period IV metals, *e.g.,* K, Ca, Mn, Fe, Co, Ni, Cu, and Zn.

An advantage of the osmotic burst encapsulates is that by encapsulating enzymes a greater amount of enzyme can be used in a given application without creating increased risk of sensitization as the result of immunoreactivity. This is an important consideration for, *e.g.*, workers in laundry detergent manufacturing facilities and consumers of laundry detergents. In some embodiments, the use of water-triggered liquid enzyme suspensions allows the inclusion of 1.5-fold, 2-fold, 3-fold, 4-fold, 5-fold, or more enzymes that would be acceptable in a comparable detergent composition that did not include the present water-triggered liquid enzyme suspensions.

### V. Methods of use

The osmotic burst encapsulates described herein may be used in various cleaning applications where a concentrated cleaning composition is diluted in water. Release of enzyme, *i.e.*," activation" of the osmotic burst encapsulates, requires diluting the concentrated cleaning composition containing the osmotic burst encapsulates at least ten-fold with water. The dilution may be far greater.

In some embodiments, activation is performed in a bucket or other container, including a container to be cleaned. In the case of a laundry detergent composition, activation is typically performed in a washing machine. In the case of a dishwashing detergent composition, activation is typically performed in a dishwasher.

The following examples are intended to illustrate, but not limit, the water-triggered liquid enzyme suspensions.

### EXAMPLES

### Preparation of ethyl cellulose-coated enzyme granules

### A. Preparation of hot cores

Hot cores of a benefit agent are prepared using aqueous fluid bed coating. Approximately 912 grams (g) of granulated sucrose are charged to the Vector VFC-1 fluid bed coater (Freund-Vector, Marion, Iowa, USA). The sucrose granules (also called seeds) function both as a substrate to receive the benefit agent and as an osmotic core which will generate a high osmotic pressure to burst a subsequently-applied ethyl cellulose membrane following diffusion of water through the membrane. The sucrose seeds are fluidized at 40-50 cubic feet per minute (CFM) air flow with an inlet temperature of 60-68°C and a bed temperature of 40°C. 623 g of the benefit agent UFC is combined with 314 g of 15% weight/weight (w/w) aqueous polyvinyl alcohol solution and an additional 53 g of water and mixed well with either an overhead mixer or a stir bar on a magnetic stirrer. This solution is then sprayed onto the sucrose seeds at an initial spray rate of 5 gram per minute (g/min) ramping up to a final spray rate of 15 g/min at atomization over 30 min, at an air pressure of 40 pound per square inch (psi). The benefit agent hot cores are then coated with ethyl cellulose through one of two processes: (B) solvent based coating of ethyl cellulose using a fluidized bed coater or (C) hot melt coating using a spinning disk coater.

### B. Solvent-based coating with ethyl cellulose

1,020 g of the previously prepared benefit agent hot cores are charged to the VFC-1 Fluid Bed coater. The hot cores are fluidized at 40-50 CFM air flow with an inlet temperature of 55-60°C and a bed temperature of 35-45°C. 1,271 g of a 15% (w/w) solution of ethyl cellulose combined dissolved in ethanol is combined with 21 g of triacetin plasticizer and this solution is sprayed onto the granule hot cores with an atomization air pressure of 40 psi and a spray rate of 10 g/m. An optional annealing step may be performed at 60-80 °C for 30 minutes (min) after the coating is complete.

### C. Hot melt coating with ethyl cellulose

1,020 g of the previously prepared benefit agent hot cores are charged to the spin coater. 191 g of powdered ethyl cellulose is combined with 21 g of triacetin and the mixture is heated to 160 -180°C to form a hot melt liquid. This hot melt liquid is then mixed with the solid hot cores and the hot core suspension is deposited at a rate of 100 g/min onto the center of the spinning disk platter rotating at 6,000 rpm. The coated particles are allowed to cool in a room temperature drop tower and are collected at the bottom of the tower.

### D. Preparation of sand core-based granules

Hot cores were prepared in a manner identical to Example A with 300 micron (µm) acid washed sand substituted for granulated sucrose. The benefit agent was a subtilisin variant protease UFC which functioned both as a benefit agent and the osmotic core, itself, since the UFC contained a significant fraction of lower molecular weight osmolytes, such as sugars and peptides. An aqueous dispersion based coating of ethyl cellulose was applied to the granule at 2, 4, 20, 15 and 20% w/w as described in Example B to form the final coated granules.

### E. Evaluation of enzyme leakage of sand core granules while stored in laundry detergent and release of enzyme into wash water

Sand cores based granules from Example D were evaluated for leakage by placing approximately 0.10 grams of granules into a (50 µL) milliliter polypropylene conical test tube containing 10 grams of heat-inactivated, low-water TIDE^{™} liquid laundry detergent and measuring enzyme activity in the detergent over time. The conical tube was mixed end-over-end continuously in order to keep the particles well mixed and dispersed in the detergent and the enzyme activity was measured using a standard protease activity assay.

The granules were evaluated for release into wash water by taking these granules already dispersed in the detergent and diluting them by a factor of 1,000 or more in water while mixing, After one hour of mixing, the enzyme activity in the wash water was measured using a standard protease activity assay. The percent enzyme leaked (in the case of detergent storage) or released (in the case of wash water dilution) was calculated by dividing the measured activity in the detergent or wash water by the expected activity *(i.e.,* the activity expected if all the enzyme was leaked/released from the granule).

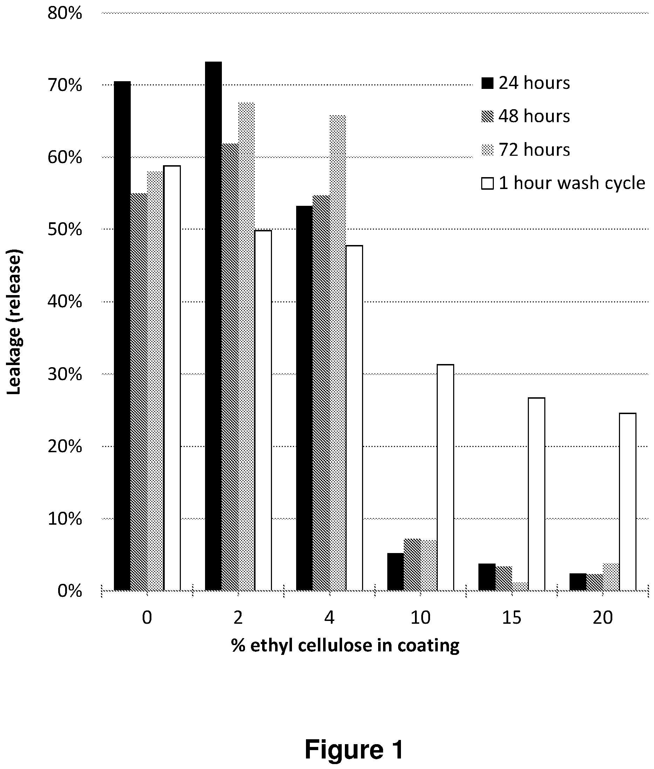

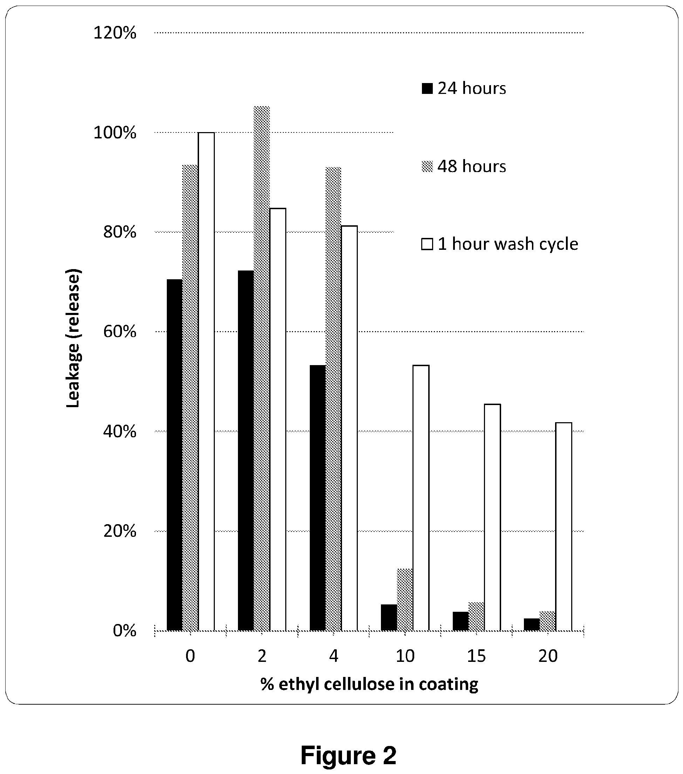

The results of enzyme leakage for granules stored for 24, 48 or 72 hours in liquid TIDE@ laundry detergent and subsequently released into wash water after one hour for a granule with a 4.55% (w/w) payload of subtilisin protease is shown in Figure 1. Similarly, the results of enzyme leakage for granules stored for 24 or 48 hours in liquid TIDE@ laundry detergent and subsequently released into wash water after one hour for a granule with a 2.66% (w/w) payload of subtilisin protease is shown in Figure 2.

As shown in Figure 1, at ethyl cellulose coating levels below about 10%, substantial leakage (up to 73%) of the enzyme payload occurs into the liquid TIDE@ laundry detergent during storage, while at ethyl cellulose coating levels above 10% leakage is greatly reduced (*e.g.*, less than 8%). In wash water release tests, a dramatic increase in release of enzyme (24 to 32%) is measured for granules with 10% or higher ethyl cellulose coating levels.

Similarly, as shown in Figure 2, at ethyl cellulose coating levels below about 10%, substantial leakage (up to 100%) of the enzyme payload occurs into the liquid TIDE@ laundry detergent during storage, while at coating levels above 10% leakage is greatly reduced (less than 13%). In wash water release tests, a dramatic increase in release of enzyme (42 to 54%) is measured for granules with 10% or higher ethyl cellulose coating levels.

## Claims

1. A delivery capsule for releasing a benefit agent from a concentrated cleaning composition upon dilution of the cleaning composition to produce diluted wash liquor, the capsule comprising:
a core comprising matrix material and a benefit agent, wherein the osmolarity of the core is within an order of magnitude of the osmolarity of the concentrated cleaning composition, which core is encapsulated with a substantially insoluble semipermeable membrane that is permeable to water but not to the matrix material, the benefit agent, or other osmolytes present in the core or concentrated cleaning composition, and wherein the semipermeable membrane is formed from a cellulose ester or cellulose ether;
wherein when immersed in the concentrated cleaning composition the osmotic pressure in the core remains within an order of magnitude of the osmotic pressure of the concentrated cleaning composition and the semipermeable membrane retains structural integrity;
wherein upon dilution of the cleaning composition by at least ten-fold to produce a wash liquor, the reduced osmotic pressure of the wash liquor compared to the concentrated cleaning composition causes water to diffuse through the semipermeable membrane into the core, causing the core to expand and burst or rupture the semi-permeable membrane, with concomitant release of the benefit agent into the wash liquor; and
wherein the benefit agent is one or more enzymes or other macromolecular actives.

2. The delivery capsule of claim 1, wherein the coating maintains structural integrity under an osmotic pressure gradient of less than +20 atmospheres, or a negative osmotic pressure gradient, but reliably bursts or ruptures and becomes permeable to enzymes and osmolytes under an osmotic pressure gradient of greater than +20 atmospheres,

3. The delivery capsule of claim 1 or claim 2, wherein the core, upon contacting the diluted wash liquor, is capable of producing an internal osmotic pressure of greater than 20 atmospheres with respect to the wash liquor, reliably bursting or rupturing the coating.

4. The delivery capsule of any one of the preceding claims, wherein:
(a) the matrix material is selected from the group consisting of sucrose, glucose, fructose, lactose, galactose, maltose, glycerol, erythritol, threitol, arabitol, xylitol, ribitol, mannitol, sorbitol, galactitol, fucitol, iditol, inositol, volemitol, isomalt, maltitol, lactitol, maltotriitol, maltotetraitol, and polyglycitol; or
(b)
the matrix material is selected from salts of inorganic or organic acids; or
(c) the matrix material is a soluble polysaccharide.

5. The delivery capsule of any one of the preceding claims, wherein the semipermeable membrane comprises a material selected from the group consisting of ethyl cellulose, cellulose acetate, cellulose diacetate and cellulose triacetate.

6. The delivery capsule of any of the preceding claims, wherein the diameter of the core is between 50 nm to 2,000 nm.

7. The delivery capsule of any one of the preceding claims, wherein the benefit agent is admixed within the matrix material.

8. The delivery capsule of any one of claims 1 to 6, wherein the benefit agent is coated onto the matrix material.

9. A method for releasing a benefit agent from a concentrated cleaning composition upon dilution of the cleaning composition in water to produce a wash liquor, comprising:
providing a concentrated cleaning composition comprising capsules comprising core particles with coatings, wherein the core particles comprises matrix material and a benefit agent, the matrix material being capable of expanding in volume when transitioned from a first environment having osmolarity similar to the osmolarity of the core to a second environment having osmolarity less than the osmolarity of the core, the core particle being coated with a substantially insoluble semipermeable membrane allowing the diffusion of water but not the core matrix materials, benefit agent, or other solutes in the core or the concentrated detergent composition, through the membrane; and
diluting the concentrated cleaning composition at least ten-fold with water to produce wash liquor having a lower osmolarity than the concentrated cleaning composition, wherein the semipermeable membrane comprises a cellulose ester;
wherein, upon transitioning from the first environment to the second environment, the core of the capsules swell in volume and causes the burst or rupture of the semipermeable membranes, resulting in the release of the benefit agent into the wash liquor, and wherein the dissolution of the semipermeable membrane is not critical to the release of the benefit agent; and
wherein the benefit agent is one or more enzymes or other macromolecular actives.

10. The method of claim 9, wherein the coating maintains structural integrity under an osmotic pressure gradient of less than +20 atmospheres, or a negative osmotic pressure gradient, but reliably bursts or ruptures and becomes permeable to enzymes and osmolytes under an osmotic pressure gradient of greater than +20 atmospheres,

11. The method of claim 9 or claim 10, wherein the core, upon contacting the diluted wash liquor, is capable of producing an internal osmotic pressure of greater than 20 atmospheres with respect to the wash liquor, reliably bursting or rupturing the coating.

12. The method of any one of claims 9 to 11, wherein:
(a) the matrix material is selected from the group consisting of sucrose, glucose, fructose, lactose, galactose, maltose, glycerol, erythritol, threitol, arabitol, xylitol, ribitol, mannitol, sorbitol, galactitol, fucitol, iditol, inositol, volemitol, isomalt, maltitol, lactitol, maltotriitol, maltotetraitol, and polyglycitol; or
(b) the matrix material is selected from salts of inorganic or organic acids; or
(c) the matrix material is a soluble polysaccharide.

13. The method of any one of claims 9 to 12, wherein the semipermeable membrane comprises a material selected from the group consisting of ethyl cellulose, cellulose acetate, cellulose diacetate, and cellulose triacetate.

14. The method of any one of claims 9 to 13, wherein the diameter of the core is between 50 nm to 2,000 nm.

15. The method of any of any one of claims 9 to 14, wherein the benefit agent is admixed within the matrix material.

16. The method of any one of claims 9 to 14, wherein the benefit agent is coated onto the matrix material.

## Patentansprüche

1. Abgabekapsel zur Freisetzung eines Mittels mit Nutzwirkung aus einer konzentrierten Reinigungszusammensetzung beim Verdünnen der Reinigungszusammensetzung, um eine verdünnte Waschlauge herzustellen, wobei die Kapsel Folgendes umfasst:
einen Kern, der Matrixmaterial und ein Mittel mit Nutzwirkung umfasst, wobei die Osmolarität des Kerns in der Größenordnung der Osmolarität der konzentrierten Reinigungszusammensetzung liegt, wobei der Kern mit einer im Wesentlichen unlöslichen semipermeablen Membran eingekapselt ist, welche für Wasser durchlässig ist, nicht jedoch für das Matrixmaterial, das Mittel mit Nutzwirkung oder für sonstige Osmolyte, wie sie in dem Kern oder der konzentrierten Reinigungszusammensetzung vorliegen, und wobei die semipermeable Membran aus einem Celluloseester oder Celluloseether gebildet ist;
wobei der osmotische Druck im Kern, beim Eintauchen desselben in die konzentrierte Reinigungszusammensetzung, in der Größenordnung des osmotischen Drucks der konzentrierten Reinigungszusammensetzung bleibt und die strukturelle Integrität der semipermeablen Membran erhalten bleibt;
wobei der osmotische Druck der Waschlauge, welcher sich beim Verdünnen der Reinigungszusammensetzung um das mindestens zehnfach zur Herstellung einer Waschlauge im Vergleich zur konzentrierten Reinigungszusammensetzung verringert, eine Diffusion von Wasser durch die semipermeable Membran in den Kern bewirkt, wodurch sich der Kern ausdehnt und die semipermeable Membran aufplatzt oder aufreißt, sodass zeitgleich eine Freisetzung des Mittels mit Nutzwirkung in die Waschlauge erfolgt; und
wobei es sich bei dem Mittel mit Nutzwirkung um ein oder mehrere Enzyme und makromolekulare Wirkstoffe handelt.

2. Abgabekapsel nach Anspruch 1, wobei die Beschichtung ihre strukturelle Integrität unter einem Gradienten des osmotischen Drucks von weniger als +20 Atmosphären, oder einem negativen Gradienten des osmotischen Drucks, beibehält, aber unter einem Gradienten des osmotischen Drucks von mehr als +20 Atmosphären auf zuverlässige Weise aufplatzt oder aufreißt und für Enzyme und Osmolyte durchlässig wird.

3. Abgabekapsel nach Anspruch 1 oder Anspruch 2, wobei der Kern, wenn er mit der verdünnten Waschlauge in Kontakt kommt, dazu befähigt ist, unter Bezugnahme auf die Waschlauge einen osmotischen Innendruck von mehr als 20 Atmosphären zu erzeugen, welcher auf zuverlässige Weise ein Aufplatzen oder Aufreißen der Beschichtung bewirkt.

4. Abgabekapsel nach einem beliebigen der vorhergehenden Ansprüche, wobei:
(a) das Matrixmaterial aus der Gruppe ausgewählt ist, die aus Saccharose, Glucose, Fructose, Lactose, Galactose, Maltose, Glycerin, Erythrit, Threit, Arabit, Xylit, Ribit, Mannit, Sorbit, Galactit, Fucit, Idit, Inosit, Volemit, Isomalt, Maltit, Lactit, Maltotriit, Maltotetrait und Polyglycit besteht; oder
(b) das Matrixmaterial aus den Salzen anorganischer oder organischer Säuren ausgewählt ist; oder
(c) es sich bei dem Matrixmaterial um ein lösliches Polysaccharid handelt.

5. Abgabekapsel nach einem beliebigen der vorhergehenden Ansprüche, wobei die semipermeable Membran ein Material umfasst, das aus der Gruppe ausgewählt ist, welche aus Ethylcellulose, Celluloseacetat, Cellulosediacetat und Cellulosetriacetat besteht.

6. Abgabekapsel nach einem beliebigen der vorhergehenden Ansprüche, wobei der Durchmesser des Kerns zwischen 50 nm und 2.000 nm beträgt.

7. Abgabekapsel nach einem beliebigen der vorhergehenden Ansprüche, wobei das Mittel mit Nutzwirkung dem Matrixmaterial innig beigemischt ist.

8. Abgabekapsel nach einem beliebigen der Ansprüche 1 bis 6, wobei das Mittel mit Nutzwirkung schichtartig auf das Matrixmaterial aufgebracht ist.

9. Verfahren zur Freisetzung eines Mittels mit Nutzwirkung aus einer konzentrierten Reinigungszusammensetzung nach dem Verdünnen der Reinigungszusammensetzung in Wasser, um eine Waschlauge herzustellen, wobei es Folgendes umfasst:
Bereitstellen einer konzentrierten Reinigungszusammensetzung, die Kapsel umfasst, welche Kernpartikel mit Beschichtungen umfasst, wobei die Kernpartikel Matrixmaterial und ein Mittel mit Nutzwirkung umfassen, wobei das Matrixmaterial dazu befähigt ist, ein größeres Volumen einzunehmen, wenn es aus einer ersten Umgebung mit einer Osmolarität, welche der Osmolarität des Kerns ähnlich ist, in eine zweite Umgebung mit einer Osmolarität übergeht, welche geringer als die Osmolarität des Kerns ist, wobei der Kernpartikel mit einer im Wesentlichen unlöslichen semipermeablen Membran beschichtet ist, die eine Diffusion von Wasser, nicht jedoch der Kernmatrixmaterialien, des Mittels mit Nutzwirkung oder sonstiger gelöster Stoffe, wie sie im Kern oder der konzentrierten Reinigungsmittelzusammensetzung vorliegen, durch die Membran ermöglicht; und
Verdünnen der konzentrierten Reinigungszusammensetzung um das mindestens zehnfache mit Wasser, um eine Waschlauge herzustellen, welche eine niedrigere Osmolarität als die konzentrierte Reinigungszusammensetzung aufweist, wobei die semipermeable Membran einen Celluloseester umfasst;
wobei der Kern der Kapsel beim Übergang aus der ersten Umgebung in die zweite Umgebung eine Volumenausdehnung erfährt und bewirkt, dass die semipermeablen Membranen aufplatzen oder aufreißen, was dazu führt, dass das Mittel in Nutzwirkung in die Waschlauge freigesetzt wird, und wobei ein Auflösen der semipermeablen Membran nicht von entscheidender Bedeutung für die Freisetzung des Mittels mit Nutzwirkung ist; und
wobei es sich bei dem Mittel mit Nutzwirkung um ein oder mehrere Enzyme oder sonstige makromolekulare Wirkstoffe handelt.

10. Verfahren nach Anspruch 9, wobei die Beschichtung ihre strukturelle Integrität unter einem Gradienten des osmotischen Drucks von weniger als +20 Atmosphären, oder einem negativen Gradienten des osmotischen Drucks, beibehält, aber unter einem Gradienten des osmotischen Drucks von mehr als +20 Atmosphären auf zuverlässige Weise aufplatzt oder aufreißt und für Enzyme und Osmolyte durchlässig wird.

11. Verfahren nach Anspruch 9 oder Anspruch 10, wobei der Kern, wenn er mit der verdünnten Waschlauge in Kontakt kommt, dazu befähigt ist, unter Bezugnahme auf die Waschlauge einen osmotischen Innendruck von mehr als 20 Atmosphären zu erzeugen, welcher auf zuverlässige Weise ein Aufplatzen oder Aufreißen der Beschichtung bewirkt.

12. Verfahren nach einem beliebigen der Ansprüche 9 bis 11, wobei:
(a) das Matrixmaterial aus der Gruppe ausgewählt ist, die aus Saccharose, Glucose, Fructose, Lactose, Galactose, Maltose, Glycerin, Erythrit, Threit, Arabit, Xylit, Ribit, Mannit, Sorbit, Galactit, Fucit, Idit, Inosit, Volemit, Isomalt, Maltit, Lactit, Maltotriit, Maltotetrait und Polyglycit besteht; oder
(b) das Matrixmaterial aus den Salzen anorganischer oder organischer Säuren ausgewählt ist; oder
(c) es sich bei dem Matrixmaterial um ein lösliches Polysaccharid handelt.

13. Verfahren nach einem beliebigen der Ansprüche 9 bis 12, wobei die semipermeable Membran ein Material umfasst, das aus der Gruppe ausgewählt ist, welche aus Ethylcellulose, Celluloseacetat, Cellulosediacetat und Cellulosetriacetat besteht.

14. Verfahren nach einem beliebigen der Ansprüche 9 bis 13, wobei der Durchmesser des Kerns zwischen 50 nm und 2.000 nm beträgt.

15. Verfahren nach einem beliebigen der Ansprüche 9 bis 14, wobei das Mittel mit Nutzwirkung dem Matrixmaterial innig beigemischt ist.

16. Verfahren nach einem beliebigen der Ansprüche 9 bis 14, wobei das Mittel mit Nutzwirkung schichtartig auf das Matrixmaterial aufgebracht ist.

## Revendications

1. Capsule d'administration destinée à la libération d'un agent bénéfique à partir d'une composition nettoyante concentrée, lors de la dilution de la composition de nettoyage, afin de produire une liqueur de lavage diluée, la capsule comprenant :
un noyau comprenant un matériau de matrice et un agent bénéfique, où l'osmolarité du noyau se situe au sein d'un ordre de grandeur de l'osmolarité de la composition nettoyante concentrée, lequel noyau étant encapsulé dans une membrane semi-perméable sensiblement insoluble, qui est perméable à l'eau mais pas au matériau de matrice, à l'agent bénéfique ou à d'autres osmolytes présents dans le noyau ou dans la composition nettoyante concentrée, et où la membrane semi-perméable est formée à partir d'un ester de cellulose ou d'un éther de cellulose ;
où, lors d'une immersion dans la composition nettoyante concentrée, la pression osmotique dans le noyau reste au sein d'un ordre de grandeur de la pression osmotique de la composition nettoyante concentrée et la membrane semi-perméable conserve son intégrité structurelle ;
où, lors de la dilution de la composition de nettoyage par au moins dix fois afin de produire une liqueur de lavage, la pression osmotique réduite de la liqueur de lavage par rapport à la composition nettoyante concentrée entraîne la diffusion de l'eau à travers la membrane semi-perméable vers le noyau, ce qui provoque l'expansion du noyau et l'éclatement ou la rupture de la membrane semi-perméable, avec la libération concomitante de l'agent bénéfique dans la liqueur de lavage ; et
où l'agent bénéfique est constitué d'une ou plusieurs enzymes ou d'autres principes actifs macromoléculaires.

2. Capsule d'administration selon la revendication 1, dans laquelle le revêtement conserve son intégrité structurelle dans un gradient de pression osmotique inférieur à +20 atmosphères, ou un gradient de pression osmotique négatif, mais éclate ou se rompt de manière fiable et devient perméable aux enzymes et aux osmolytes dans un gradient de pression osmotique supérieur à +20 atmosphères.

3. Capsule d'administration selon la revendication 1 ou la revendication 2, dans laquelle le noyau, au contact de la liqueur de lavage diluée, est capable de produire une pression osmotique interne supérieure à 20 atmosphères par rapport à la liqueur de lavage, provoquant l'éclatement ou la rupture de manière fiable du revêtement.

4. Capsule d'administration selon l'une quelconque des revendications précédentes, dans laquelle :
(a) le matériau de matrice est choisi dans le groupe constitué par le saccharose, le glucose, le fructose, le lactose, le galactose, le maltose, le glycérol, l'érythritol, le thréitol, l'arabitol, le xylitol, le ribitol, le mannitol, le sorbitol, le galactitol, le fucitol, l'iditol, l'inositol, le volémitol, l'isomalt, le maltitol, le lactitol, le maltotriitol, le maltotétraitol et le polyglycitol ; ou
(b) le matériau de matrice est choisi parmi les sels d'acides inorganiques ou organiques ; ou
(c) le matériau de matrice est un polysaccharide soluble.

5. Capsule d'administration selon l'une quelconque des revendications précédentes, dans laquelle la membrane semi-perméable comprend un matériau choisi dans le groupe constitué par l'éthylcellulose, l'acétate de cellulose, le diacétate de cellulose, et le triacétate de cellulose.

6. Capsule d'administration selon l'une quelconque des revendications précédentes, dans laquelle le diamètre du noyau va de 50 nm à 2000 nm.

7. Capsule d'administration selon l'une quelconque des revendications précédentes, dans laquelle l'agent bénéfique est incorporé par mélange au sein du matériau de matrice.

8. Capsule d'administration selon l'une quelconque des revendications 1 à 6, dans laquelle l'agent bénéfique est revêtu sur le matériau de matrice.

9. Méthode destinée à la libération d'un agent bénéfique à partir d'une composition nettoyante concentrée, lors de la dilution de la composition de nettoyage dans l'eau afin de produire une liqueur de lavage, comprenant :
la mise à disposition d'une composition nettoyante concentrée comprenant des capsules comprenant des particules de noyau avec des revêtements, où les particules de noyau comprennent un matériau de matrice et un agent bénéfique, le matériau de matrice étant capable d'augmenter de volume lors d'un passage d'un premier environnement ayant une osmolarité similaire à l'osmolarité du noyau vers un deuxième environnement ayant une osmolarité inférieure à l'osmolarité du noyau, la particule de noyau étant revêtue d'une membrane semi-perméable sensiblement insoluble permettant la diffusion de l'eau mais pas des matériaux de matrice du noyau, de l'agent bénéfique, ou d'autres solutés dans le noyau ou la composition détergente concentrée, à travers la membrane ; et
la dilution de la composition nettoyante concentrée au moins dix fois par de l'eau pour produire une liqueur de lavage ayant une osmolarité inférieure à celle de la composition nettoyante concentrée, la membrane semi-perméable comprenant un ester de cellulose ;
où, lors du passage du premier environnement vers le deuxième environnement, le noyau des capsules gonfle en volume et provoque l'éclatement ou la rupture des membranes semi-perméables, entraînant la libération de l'agent bénéfique dans la liqueur de lavage, et où la dissolution de la membrane semi-perméable n'est pas essentielle à la libération de l'agent bénéfique ; et
où l'agent bénéfique est constitué d'une ou plusieurs enzymes ou d'autres principes actifs macromoléculaires.

10. Méthode selon la revendication 9, dans laquelle le revêtement conserve son intégrité structurelle dans un gradient de pression osmotique inférieur à +20 atmosphères, ou un gradient de pression osmotique négatif, mais éclate ou se rompt de manière fiable et devient perméable aux enzymes et aux osmolytes dans un gradient de pression osmotique supérieur à +20 atmosphères.

11. Méthode selon la revendication 9 ou la revendication 10, dans laquelle le noyau, au contact de la liqueur de lavage diluée, est capable de produire une pression osmotique interne supérieure à 20 atmosphères par rapport à la liqueur de lavage, provoquant l'éclatement ou la rupture de manière fiable du revêtement.

12. Méthode selon l'une quelconque des revendications 9 à 11, dans laquelle :
(a) le matériau de matrice est choisi dans le groupe constitué par le saccharose, le glucose, le fructose, le lactose, le galactose, le maltose, le glycérol, l'érythritol, le thréitol, l'arabitol, le xylitol, le ribitol, le mannitol, le sorbitol, le galactitol, le fucitol, l'iditol, l'inositol, le volémitol, l'isomalt, le maltitol, le lactitol, le maltotriitol, le maltotétraitol et le polyglycitol ; ou
(b) le matériau de matrice est choisi parmi les sels d'acides inorganiques ou organiques ; ou
(c) le matériau de matrice est un polysaccharide soluble.

13. Méthode selon l'une quelconque des revendications 9 à 12, dans laquelle la membrane semi-perméable comprend un matériau choisi dans le groupe constitué par l'éthylcellulose, l'acétate de cellulose, le diacétate de cellulose, et le triacétate de cellulose.

14. Méthode selon l'une quelconque des revendications 9 à 13, dans laquelle le diamètre du noyau va de 50 nm à 2000 nm.

15. Méthode selon l'une quelconque des revendications 9 à 14, dans laquelle l'agent bénéfique est incorporé par mélange au sein du matériau de matrice.

16. Méthode selon l'une quelconque des revendications 9 à 14, dans laquelle l'agent bénéfique est revêtu sur le matériau de matrice.
